# EUROPEAN PATENT APPLICATION

(11) **EP 4 842 014 A1**
(43) Date of publication of application: **18.11.2026**
(21) Application number: 24916578.8
(22) Date of filing: 22.11.2024
(51) Int. Cl.: H04R 1/32

(54) **LOUDNESS ADJUSTMENT METHOD AND APPARATUS, STORAGE MEDIUM AND ELECTRONIC DEVICE**

(30) Priority: 08.01.2024 CN 202410029828
(71) Applicant: Huizhou Vision New Technology Co., Ltd., Huizhou, Guangdong 516000 (CN)
(72) Inventor: MA, Xuan, Huizhou, Guangdong 516000 (CN); CHEN, Wenjie, Huizhou, Guangdong 516000 (CN); GAO, Weibiao, Huizhou, Guangdong 516000 (CN)
(74) Representative: Murgitroyd & Company
(86) International application number: PCT/CN2024/134004
(87) International publication number: WO 2025/148528

(57) **Abstract**

The present application relates to the field of sound playback. Disclosed are a loudness adjustment method and apparatus, a storage medium and an electronic device. The method comprises: on the basis of a first distance and a first azimuth angle between a first device and a second device, and a second distance and a second azimuth angle between the first device and a target user, calculating a third distance between the second device and the target user; and, on the basis of the third distance and the second distance, calculating a playback gain adjustment value which is used for device playback gain regulation and control. The present application improves device loudness equalization effects.

## Description

This application claims priority to Chinese Patent Application No. 202410029828.3, filed with the China National Intellectual Property Administration on January 8, 2024, and titled "LOUDNESS ADJUSTMENT METHOD AND APPARATUS, STORAGE MEDIUM, AND ELECTRONIC DEVICE", the entire contents of which are incorporated herein by reference.

### TECHNICAL FIELD

The present application relates to the field of sound playback, and more particularly, to a loudness adjustment method, an apparatus, a storage medium, and an electronic device.

### BACKGROUND

Dual-device usage scenarios are becoming increasingly common. In such scenarios, a co-broadcasting scenario may arise wherein a first device (such as a television) and a second device (such as a Soundbar) collaboratively play the same audio (usually audio provided by the first device).

In a co-broadcasting scenario, although the collaborative sound production by the first device and the second device can provide a better listening experience, the loudness of the sound from the first and second devices as perceived by the listener (user) may become unbalanced because the listener may move within the sound field. This leads to a poor listening experience for the user. To address this problem, the current conventional practice is for the listener to sit in an optimal listening position and manually adjust the loudness of both devices to achieve loudness equalization.

### Technical Problem

Under the current solution, the loudness may only be somewhat equalized when the user is near the optimal listening position. Since the listener moves dynamically within the sound field, the loudness is often not sufficiently equalized in many positions, which adversely affects the user experience.

### SUMMARY

Embodiments of the present application provide a solution that can effectively improve the device loudness equalization effect in a dual-device co-broadcasting scenario and enhance the user experience.

Embodiments of the present application provide the following technical solutions:
According to an embodiment of the present application, a loudness adjustment method is provided. The method includes: detecting a first distance and a first azimuth angle between a first device and a second device, wherein the first device and the second device are in a co-broadcasting scenario; detecting a second distance and a second azimuth angle between the first device and a target user; calculating a third distance between the second device and the target user based on the first distance, the first azimuth angle, the second distance, and the second azimuth angle; and calculating a playback gain adjustment value based on the third distance and the second distance, wherein the playback gain adjustment value is used for device playback gain control in the co-broadcasting scenario.

In some embodiments of the present application, the method further includes: obtaining a distance difference by calculating a difference between the second distance and the third distance; and calculating a playback delay based on the distance difference, wherein the playback delay is used for device playback time control in the co-broadcasting scenario.

In some embodiments of the present application, the playback gain adjustment value is for an entity to be adjusted. After the playback gain adjustment value is calculated, the method further includes: calculating a target playback gain of the entity to be adjusted by summing an entity playback gain of a reference entity and the playback gain adjustment value; and in the co-broadcasting scenario, controlling the reference entity to perform audio playback based on the entity playback gain, and controlling the entity to be adjusted to perform audio playback based on the target playback gain, wherein the reference entity and the entity to be adjusted are one of the first device and the second device, respectively.

In some embodiments of the present application, the playback delay is for an entity to be adjusted. After the playback delay is calculated, the method further includes: in the co-broadcasting scenario, controlling a reference entity to play a co-broadcasted audio, and controlling the entity to be adjusted to play the co-broadcasted audio, wherein an audio playback time of the entity to be adjusted is later than that of the reference entity by the playback delay, and wherein the reference entity and the entity to be adjusted are one of the first device and the second device, respectively.

In some embodiments of the present application, calculating the playback gain adjustment value based on the third distance and the second distance includes: obtaining a distance ratio by calculating a ratio of the third distance to the second distance; and calculating the playback gain adjustment value based on the distance ratio.

In some embodiments of the present application, calculating the playback gain adjustment value based on the distance ratio includes: calculating the playback gain adjustment value according to the formula Δg = 20logA, wherein A denotes the distance ratio, and Δg denotes the playback gain adjustment value.

In some embodiments of the present application, calculating the playback delay based on the distance difference includes: obtaining a delay value by calculating a ratio of the distance difference to the speed of sound; and obtaining the playback delay based on the delay value.

In some embodiments of the present application, obtaining the playback delay based on the delay value includes one of the following: using the delay value as the playback delay; or obtaining the playback delay by multiplying the delay value by a preset adjustment coefficient, wherein the preset adjustment coefficient is an adjustment coefficient corresponding to the device types of the first device and the second device.

In some embodiments of the present application, calculating the third distance between the second device and the target user based on the first distance, the first azimuth angle, the second distance, and the second azimuth angle includes: calculating the third distance according to the formula $D = \sqrt{{h}^{2} + {d}^{2} - 2 hdcos \left(α-β\right)}$, wherein D denotes the third distance, h denotes the first distance, d denotes the second distance, α denotes the second azimuth angle, and β denotes the first azimuth angle.

According to an embodiment of the present application, a loudness adjustment apparatus is provided. The apparatus includes: a first detection module, configured to detect a first distance and a first azimuth angle between a first device and a second device, wherein the first device and the second device are in a co-broadcasting scenario; a second detection module, configured to detect a second distance and a second azimuth angle between the first device and a target user; a first calculation module, configured to calculate a third distance between the second device and the target user based on the first distance, the first azimuth angle, the second distance, and the second azimuth angle; and a second calculation module, configured to calculate a playback gain adjustment value based on the third distance and the second distance, wherein the playback gain adjustment value is used for device playback gain control in the co-broadcasting scenario.

In some embodiments of the present application, the apparatus further includes a third calculation module configured to: obtain a distance difference by calculating a difference between the second distance and the third distance; and calculate a playback delay based on the distance difference, wherein the playback delay is used for device playback time control in the co-broadcasting scenario.

In some embodiments of the present application, the playback gain adjustment value is for an entity to be adjusted, and the apparatus further includes a first control module configured to: calculate a target playback gain of the entity to be adjusted by summing an entity playback gain of a reference entity and the playback gain adjustment value; and in the co-broadcasting scenario, control the reference entity to perform audio playback based on the entity playback gain, and control the entity to be adjusted to perform audio playback based on the target playback gain, wherein the reference entity and the entity to be adjusted are one of the first device and the second device, respectively.

In some embodiments of the present application, the playback delay is for an entity to be adjusted, and the apparatus further includes a second control module configured to: in the co-broadcasting scenario, control a reference entity to play a co-broadcasted audio, and control the entity to be adjusted to play the co-broadcasted audio, wherein an audio playback time of the entity to be adjusted is later than that of the reference entity by the playback delay, and wherein the reference entity and the entity to be adjusted are one of the first device and the second device, respectively.

In some embodiments of the present application, the second calculation module is configured to: calculate a ratio of the third distance to the second distance to obtain a distance ratio; and calculate the playback gain adjustment value based on the distance ratio.

In some embodiments of the present application, the second calculation module is configured to calculate the playback gain adjustment value according to the formula Δg = 20logA, where A represents the distance ratio, and Δg represents the playback gain adjustment value.

In some embodiments of the present application, the third calculation module is configured to: calculate a ratio of the distance difference to the speed of sound to obtain a delay value; and determine the playback delay based on the delay value.

In some embodiments of the present application, the third calculation module is configured to perform one of the following: using the delay value as the playback delay; or multiplying the delay value by a preset adjustment coefficient to obtain the playback delay, where the preset adjustment coefficient is an adjustment coefficient corresponding to the device types of the first device and the second device.

In some embodiments of the present application, the first calculation module is configured to calculate the third distance according to the formula $D = \sqrt{{h}^{2} + {d}^{2} - 2 hdcos \left(α-β\right)}$, where D represents the third distance, h represents the first distance, d represents the second distance, α represents the second azimuth angle, and β represents the first azimuth angle.

According to another embodiment of the present application, a storage medium is provided, on which a computer program is stored. When the computer program is executed by a processor of a computer, the computer is caused to perform the method according to embodiments of the present application.

According to another embodiment of the present application, an electronic device may include: a memory storing a computer program; and a processor configured to read the computer program stored in the memory to execute the method according to embodiments of the present application.

According to another embodiment of the present application, a computer program product or a computer program is provided. The computer program product or computer program includes computer instructions stored in a computer-readable storage medium. A processor of a computer device reads the computer instructions from the computer-readable storage medium and executes the computer instructions, causing the computer device to perform the methods provided in the various optional implementations of the embodiments of the present application.

### beneficial effect

In an embodiment of the present application, a first distance and a first azimuth angle between a first device and a second device are detected, where the first device and the second device are in a co-broadcasting scenario; a second distance and a second azimuth angle between the first device and a target user are detected; a third distance between the second device and the target user is calculated based on the first distance, the first azimuth angle, the second distance, and the second azimuth angle; and a playback gain adjustment value is calculated based on the third distance and the second distance, where the playback gain adjustment value is used for performing device playback gain control in the co-broadcasting scenario.

In this manner, in a co-broadcasting scenario of a first device and a second device, the third distance between the second device and the target user is calculated by detecting the first distance, the first azimuth angle, the second distance, and the second azimuth angle. A playback gain adjustment value is calculated based on the third distance and the second distance. Device playback gain control is performed in the co-broadcasting scenario based on the playback gain adjustment value. This allows a listener, when moving within the co-broadcasting sound field of the first and second devices, to consistently hear a loudness-equalized sound co-broadcasted by the first and second devices. This can effectively improve the device loudness equalization effect in a dual-device co-broadcasting scenario and enhance the user experience.

### BRIEF DESCRIPTION OF THE DRAWINGS

To more clearly illustrate the technical solutions in the embodiments of the present application, the accompanying drawings that need to be used in the description of the embodiments will be briefly introduced below. It is obvious that the accompanying drawings in the following description are only some embodiments of the present application. For those of ordinary skill in the art, other drawings can also be obtained from these accompanying drawings without creative effort.
FIG. 1 shows a flowchart of a loudness adjustment method according to an embodiment of the present application.
FIG. 2 shows a schematic diagram of a loudness adjustment system architecture according to an embodiment of the present application.
FIG. 3 shows a schematic diagram of a loudness adjustment system architecture according to an embodiment of the present application.
FIG. 4 shows a block diagram of a loudness adjustment apparatus according to an embodiment of the present application.
FIG. 5 shows a block diagram of an electronic device according to an embodiment of the present application.

### DETAILED DESCRIPTION

The present disclosure will be further described in detail below with reference to the accompanying drawings and embodiments. It should be understood that the embodiments provided herein are only for explaining the present disclosure and are not intended to limit the present disclosure. In addition, the embodiments provided below are some, but not all, embodiments for implementing the present disclosure. The technical solutions described in the embodiments of the present disclosure may be combined in any manner without conflict.

It should be noted that, in the embodiments of the present disclosure, the terms "including," "comprising," or any other variant thereof are intended to cover a non-exclusive inclusion, such that a method or apparatus that includes a series of elements not only includes the explicitly recited elements, but also includes other elements not explicitly listed, or elements inherent to such a method or apparatus. Without further limitations, an element defined by the statement "including a..." does not preclude the existence of other related elements in the method or apparatus that includes the element (e.g., operations in a method or units in an apparatus, where a unit can be a part of a circuit, a part of a processor, a part of a program or software, etc.).

For example, the loudness adjustment method provided in the embodiments of the present disclosure includes a series of operations, but the loudness adjustment method provided in the embodiments of the present disclosure is not limited to the described operations. Similarly, the loudness adjustment apparatus provided in the embodiments of the present disclosure includes a series of units, but the apparatus provided in the embodiments of the present disclosure is not limited to including the explicitly recited units, and may also include units required for acquiring relevant information or for processing based on the information.

Unless otherwise defined, all technical and scientific terms used herein have the same meaning as commonly understood by one of ordinary skill in the art to which this disclosure belongs. The terminology used herein is for the purpose of describing particular embodiments only and is not intended to be limiting of the disclosure.

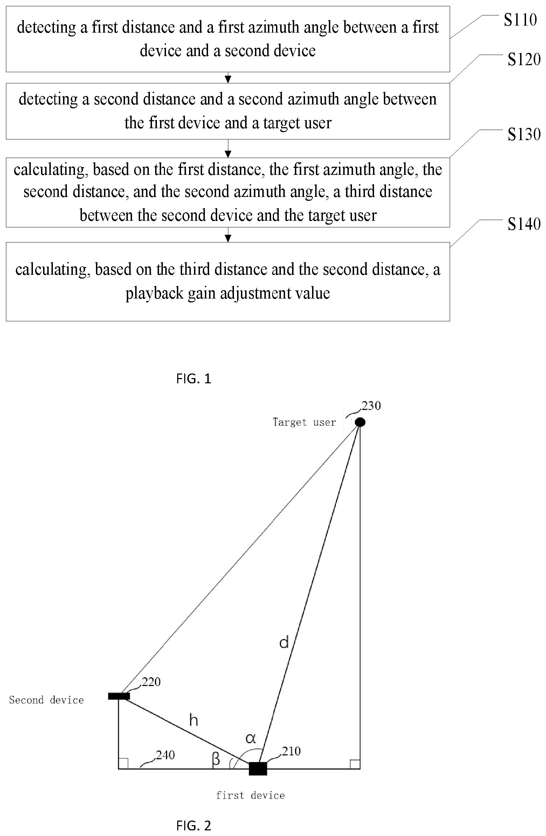

FIG. 1 schematically shows a flowchart of a loudness adjustment method according to an embodiment of the present application. The loudness adjustment method may be performed by any device or server with processing capabilities, such as a television, a computer, a mobile phone, a smartwatch, and a home appliance, and the server may be a cloud server or a physical server.

In a specific embodiment of the present application, the loudness adjustment method is performed by a device, which may be one of the first device and the second device. The device may also be another device other than the first device or the second device (e.g., a mobile phone held by the user).

As shown in FIG. 1, the loudness adjustment method may include operations S110 to S140.

operation S110, detecting a first distance and a first azimuth angle between a first device and a second device, where the first device and the second device are in a co-broadcasting scenario; operation S120, detecting a second distance and a second azimuth angle between the first device and a target user; operation S130, calculating, based on the first distance, the first azimuth angle, the second distance, and the second azimuth angle, a third distance between the second device and the target user; operation S140, calculating, based on the third distance and the second distance, a playback gain adjustment value, where the playback gain adjustment value is used for performing device playback gain control in the co-broadcasting scenario.

In a dual-device co-broadcasting scenario where a first device and a second device collaboratively play the same audio, relevant detections can be performed on the first device and the second device. Through the detections, the first distance, the second distance, the first azimuth angle, and the second azimuth angle can be obtained.

Specifically, the first azimuth angle can be the angle between the line connecting the first device and the second device and the line connecting the microphone array elements in the first device. The second azimuth angle can be the angle between the line connecting the target user and the first device and the line connecting the microphone array elements in the first device.

Referring to FIG. 2, the first azimuth angle between the first device 210 and the second device 220 is shown as β in FIG. 2. The second azimuth angle between the first device 210 and the target user 230 is shown as α in FIG. 2. The line connecting the microphone array elements in the first device 210 is shown as line 240 in FIG. 2. The first distance is shown as h in FIG. 2, and the second distance is shown as d in FIG. 2.

Further, the third distance between the second device and the target user can be calculated based on the first distance, the first azimuth angle, the second distance, and the second azimuth angle. The third distance is shown as D between the second device 220 and the target user 230 in FIG. 2.

A playback gain adjustment value is calculated based on the third distance and the second distance. The playback gain adjustment value is used for performing device playback gain control in the co-broadcasting scenario. Based on the playback gain adjustment value, the playback gain of a certain device can be increased in the co-broadcasting scenario, so that the user hears a sound of equalized loudness from both devices.

In this manner, based on operations S110 to S140, in a co-broadcasting scenario of a first device and a second device, the third distance between the second device and the target user is calculated by detecting the first distance, the first azimuth angle, the second distance, and the second azimuth angle. A playback gain adjustment value is calculated based on the third distance and the second distance. Device playback gain control is performed in the co-broadcasting scenario based on the playback gain adjustment value. This allows a listener, when moving within the co-broadcasting sound field of the first and second devices, to consistently hear a loudness-equalized sound co-broadcasted by the first and second devices. This can effectively improve the device loudness equalization effect in a dual-device co-broadcasting scenario and enhance the user experience.

Further optional specific implementations for each operation of the loudness adjustment in the embodiment of FIG. 1 are described below.

In one embodiment, detecting the first distance and the first azimuth angle between a first device and a second device, where the first device and the second device are in a co-broadcasting scenario, may specifically include: acquiring, by multiple microphones in the first device, sound signals played by the second device; and calculating the first distance and the first azimuth angle based on the sound signals received by the plurality of microphones.

Specifically, a speaker in the second device (which may be a preferred speaker selected from the speakers in the second device) is controlled to play a sound signal. At the same time, a microphone array in the first device receives the sound signal, thereby obtaining the sound signals received by multiple microphones in the microphone array.

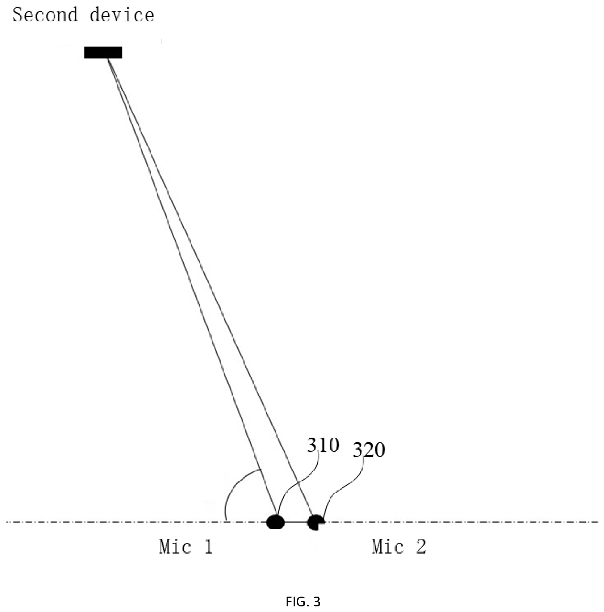

Taking a linear microphone array as an example, as shown in FIG. 3, the distance between microphone 310 and microphone 320 is d₀. The sound signal received by microphone 310 at time t is y₁(t), and the sound signal received by microphone 320 at time t is y₂(t). The cross-correlation function of y₁(t) and y₂(t) can be calculated as: ${r}_{y 1 y 2} \left(p\right) = E \left[{y}_{1}\left(t\right){y}_{2}\left(t + p\right)\right] ,$

Then the time difference τ of the sound signals received by the two microphones is the value of p at which r_{y1y2}(p) reaches its maximum value:$τ {= argmax}_{p} {r}_{y 1 y 2} \left(p\right) ,$

The angle between the line connecting the first device and the second device and the line connecting the microphone array elements in the first device is:
$β = {cos}^{- 1} \frac{τc}{{d}_{0}}$, where c is the speed of sound.

Further, a hyperbola can be drawn for which the difference of the distances to microphone 310 and microphone 320 is τc. By repeating the above operations, several sets of hyperbolas can be drawn based on the sound signals received by other groups of microphones. The intersection of the several sets of hyperbolas is the position of the second device. Thus, the first distance h between the first device and the second device can be calculated based on the position of the first device and the position of the second device.

In one embodiment, detecting the second distance and the second azimuth angle between the first device and the target user may specifically include: controlling a speaker in the first device to play an ultrasonic signal and acquiring acoustic signals received by the microphone array in the first device; and calculating the second distance and the second azimuth angle between the first device and the target user based on the acoustic signals.

Specifically, a speaker in the first device (which may be a preferred speaker selected from the multiple speakers in the first device) is controlled to play an ultrasonic signal, while a microphone array (multiple microphones) in the first device receives acoustic signals.

Perform bandpass filtering on the received acoustic signal (e.g., 20 kHz to 24 kHz band-pass filtering) to obtain a filtered signal. This filtered signal is preprocessed to remove direct sound and reflections from stationary objects, thereby obtaining a signal to be analyzed.

After the played ultrasonic signal and the signal to be analyzed are multiplied, shaping filtering is performed to obtain a sinusoidal signal containing distance information. After the signal-to-noise ratio of the sinusoidal signal is improved using time-domain beamforming, a distance-Direction of Arrival (DOA) profile is estimated using the 2D-MUSIC algorithm. Then, the distance-DOA profile is searched to find the position with the maximum energy, which is the estimated second distance d and second azimuth angle α of the target user relative to the first device at each time instant.

In one embodiment, calculating the third distance between the second device and the target user based on the first distance, the first azimuth angle, the second distance, and the second azimuth angle may specifically include: calculating the third distance according to the formula $D = \sqrt{{h}^{2} + {d}^{2} - 2 hdcos \left(α-β\right)}$ , where D represents the third distance, h represents the first distance, d represents the second distance, α represents the second azimuth angle, and β represents the first azimuth angle.

The applicant has found that, according to the formula $D = \sqrt{{h}^{2} + {d}^{2} - 2 hdcos \left(α-β\right)}$, the third distance between the second device and the target user can be accurately calculated. Based on this third distance, an effective playback gain adjustment value can be further accurately calculated, effectively improving the loudness equalization adjustment effect.

It can be understood that, in other embodiments, the third distance between the second device and the target user can be calculated based on other preset formulas, according to the first distance, the first azimuth angle, the second distance, and the second azimuth angle.

In an embodiment, calculating the playback gain adjustment value based on the third distance and the second distance may include: calculating a ratio of the third distance to the second distance to obtain a distance ratio; and calculating the playback gain adjustment value based on the distance ratio.

Furthermore, calculating the playback gain adjustment value based on the distance ratio may specifically include: calculating the playback gain adjustment value according to the formula Δg = 20logA, where A refers to the distance ratio, and Δg refers to the playback gain adjustment value.

If A=D/d, where D is the third distance and d is the second distance, the playback gain adjustment value Δg is the gain adjustment value for the second device; that is, the second device is the entity to be adjusted in this case. If A=d/D, the playback gain adjustment value Δg is the gain adjustment value for the first device; that is, the first device is the entity to be adjusted in this case.

The applicant has found that calculating the playback gain adjustment value according to the formula Δg = 20logA and performing playback gain control based on this playback gain adjustment value can very effectively improve the loudness equalization adjustment effect.

In an embodiment, the playback gain adjustment value is a gain adjustment value of an entity to be adjusted. After the playback gain adjustment value is calculated based on the third distance and the second distance, the method further includes: summing an entity playback gain of a reference entity and the playback gain adjustment value to obtain a target playback gain of the entity to be adjusted; and in the co-broadcasting scenario, controlling the reference entity to perform audio playback based on the entity playback gain, and controlling the entity to be adjusted to perform audio playback based on the target playback gain, one of the first device and the second device is the reference entity, and the other is the entity to be adjusted.

One of the first device and the second device is selected as the reference entity, and the other is the entity to be adjusted. By performing calculations based on the third distance and the second distance, the playback gain adjustment value corresponding to the entity to be adjusted can be obtained.

According to the formula g₂ = g₁ + Δg, the entity playback gain g₁ of the reference entity (i.e., the playback gain of the reference entity) can be summed with the playback gain adjustment value Δg to obtain the target playback gain g₂ of the entity to be adjusted.

In the co-broadcasting scenario, the reference entity can be controlled to perform audio playback based on the entity playback gain, and the entity to be adjusted can be controlled to perform audio playback based on the target playback gain, which allows the user to hear a co-broadcasting effect with extremely balanced loudness.

In an embodiment, the method further includes: calculating a difference between the second distance and the third distance to obtain a distance difference; and calculating a playback delay based on the distance difference, wherein the playback delay is used for device playback time control in the co-broadcasting scenario.

A distance difference can be calculated by finding the difference between the second distance and the third distance, and a playback delay can be calculated based on this distance difference. In one example, a distance difference Δd can be obtained by subtracting the third distance from the second distance.

A playback delay is calculated based on the distance difference, and the playback delay is used for device playback time control in the co-broadcasting scenario. By performing device playback time control in the co-broadcasting scenario based on the playback delay, a listener (i.e., the target user) can always hear the sounds from the first device and the second device played in sync while moving within the sound field created by the combination of the first and second devices. This provides auxiliary improvement to the loudness equalization effect, further enhancing the loudness control effect.

Furthermore, calculating the playback delay based on the distance difference may specifically include: calculating a ratio of the distance difference to the speed of sound to obtain a delay value; and obtaining the playback delay based on the delay value.

According to a formula, the ratio of the distance difference Δd to the speed of sound C can be calculated to obtain a delay value. The playback delay can be obtained based on the delay value. Performing device playback time control based on this playback delay allows a listener (i.e., the target user) to always hear the sounds from the first device and the second device played in sync while moving within the sound field created by the combination of the first and second devices.

Furthermore, obtaining the playback delay based on the delay value includes one of the following methods: a first method, using the delay value as the playback delay; a second method, multiplying the delay value by a preset adjustment coefficient to obtain the playback delay, the preset adjustment coefficient is an adjustment coefficient corresponding to the device types of the first device and the second device.

In the first method, using the delay value as the playback delay can effectively ensure the device playback time control effect. In the second method, multiplying the delay value by a preset adjustment coefficient corresponding to the device type (which may specifically be the device model) of the first device and the second device to obtain the playback delay can further improve the device playback time control effect.

Furthermore, the playback delay is a delay of the entity to be adjusted. After the playback delay is calculated based on the distance difference, the method may further include: in the co-broadcasting scenario, controlling a reference entity to play a co-broadcasted audio, and controlling the entity to be adjusted to play the co-broadcasted audio, the audio playback of the entity to be adjusted is delayed by the playback delay relative to the reference entity, and one of the first device and the second device is the reference entity, and the other is the entity to be adjusted.

The playback delay is the delay of the entity to be adjusted. For example, if the second device is the entity to be adjusted, the playback delay corresponding to the second device is calculated from a distance difference Δd obtained by subtracting the third distance D from the second distance d. Conversely, if the first device is the entity to be adjusted, the playback delay corresponding to the first device is calculated from a distance difference Δd obtained by subtracting the second distance d from the third distance D.

In the co-broadcasting scenario, the reference entity can be controlled to play the co-broadcasted audio, and the entity to be adjusted can be controlled to play the co-broadcasted audio according to the formula s₂(t) = s₁(t + Δt), thereby causing the audio playback of the entity to be adjusted to be delayed by the playback delay Δt relative to the reference entity. One of the first device and the second device is the reference entity and the other is the entity to be adjusted, s₁(t) is the co-broadcasted audio played by the reference entity, and s₂(t) is the co-broadcasted audio played by the entity to be adjusted.

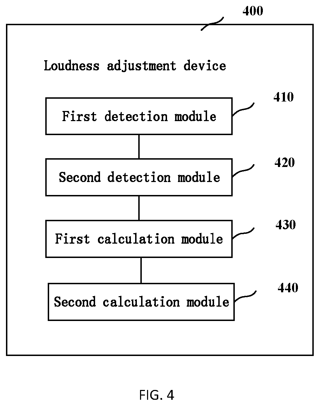

To facilitate better implementation of the loudness adjustment method provided in the embodiments of the present application, an embodiment of the present application also provides a loudness adjustment apparatus based on the above loudness adjustment method. The meanings of the terms therein are the same as in the above loudness adjustment method, and specific implementation details can be referred to in the description of the method embodiments. FIG. 4 shows a block diagram of a loudness adjustment apparatus according to an embodiment of the present application.

As shown in FIG. 4, a loudness adjustment apparatus 400 may include: a first detection module 410, configured to detect a first distance and a first azimuth angle between a first device and a second device, the first device and the second device are in a co-broadcasting scenario; a second detection module 420, configured to detect a second distance and a second azimuth angle between the first device and a target user; a first calculation module 430, configured to calculate, based on the first distance, the first azimuth angle, the second distance, and the second azimuth angle, a third distance between the second device and the target user; and a second calculation module 440, configured to calculate, based on the third distance and the second distance, a playback gain adjustment value, the playback gain adjustment value is used for device playback gain control in the co-broadcasting scenario.

In some embodiments, the apparatus further includes a third calculation module, configured to: calculate a distance difference based on the second distance and the third distance; and calculate a playback delay based on the distance difference, the playback delay is used for device playback time control in the co-broadcasting scenario.

In some embodiments, the playback gain adjustment value is a gain adjustment value of an entity to be adjusted. After the playback gain adjustment value is calculated based on the third distance and the second distance, the apparatus further includes a first control module, configured to: sum an entity playback gain of a reference entity and the playback gain adjustment value to obtain a target playback gain of the entity to be adjusted; and in the co-broadcasting scenario, control the reference entity to perform audio playback based on the entity playback gain, and control the entity to be adjusted to perform audio playback based on the target playback gain, one of the reference entities and the entity to be adjusted is the first device.

In some embodiments, the playback delay is a delay of an entity to be adjusted. After the playback delay is calculated based on the distance difference, the apparatus further includes a second control module, configured to: in the co-broadcasting scenario, control a reference entity to play a co-broadcasted audio, and control the entity to be adjusted to play the co-broadcasted audio, the audio playback of the entity to be adjusted is delayed by the playback delay relative to the reference entity, and one of the reference entities and the entity to be adjusted is the first device.

In some embodiments, the second calculation module is configured to: perform a ratio calculation on the third distance and the second distance to obtain a distance ratio; and calculate the playback gain adjustment value based on the distance ratio.

In some embodiments, the second calculation module is configured to: calculate the playback gain adjustment value according to the formula Δg = 20logA, where A refers to the distance ratio, and Δg refers to the playback gain adjustment value.

In some embodiments, the third calculation module is configured to: calculate a ratio of the distance difference to a speed of sound to obtain a delay value; and obtain the playback delay based on the delay value.

In some embodiments, the third calculation module is configured to implement one of the following methods: using the delay value as the playback delay; or multiplying the delay value by a preset adjustment coefficient to obtain the playback delay, the preset adjustment coefficient is an adjustment coefficient corresponding to the device types of the first device and the second device.

In some embodiments, the first calculation module is configured to: calculate the third distance according to the formula $D = \sqrt{{h}^{2} + {d}^{2} - 2 hdcos \left(α-β\right)}$, where D refers to the third distance, h refers to the first distance, d refers to the second distance, α refers to the second azimuth angle, and β refers to the first azimuth angle.

It should be noted that although several modules or units of the apparatus for performing actions have been mentioned in the detailed description above, this division is not mandatory. In fact, according to the embodiments of the present application, the features and functions of two or more modules or units described above may be embodied in one module or unit. Conversely, the features and functions of one module or unit described above may be further divided and embodied by multiple modules or units.

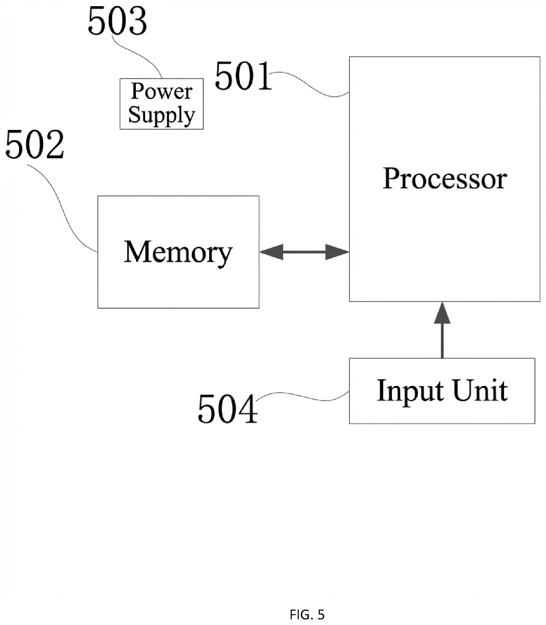

In addition, an embodiment of the present application also provides an electronic device, as shown in FIG. 5. FIG. 5 shows a block diagram of an electronic device according to an embodiment of the present application. Specifically:
The electronic device may include components such as a processor 501 with one or more processing cores, a memory 502 with one or more computer-readable storage media, a power supply 503, and an input unit 504. Those skilled in the art will understand that the structure of the electronic device shown in FIG. 5 does not constitute a limitation on the electronic device, and may include more or fewer components than shown, or combine certain components, or have a different arrangement of components. Wherein:
The processor 501 is the control center of the electronic device, connecting various parts of the entire electronic device using various interfaces and lines. By running or executing software programs and/or modules stored in the memory 502, and calling data stored in the memory 502, it performs various functions and processes data of the electronic device, thereby performing overall monitoring of the electronic device. Optionally, the processor 501 may include one or more processing cores. Preferably, the processor 501 may integrate an application processor and a modem processor, the application processor mainly handles the operating system, user interfaces, and applications, etc., and the modem processor mainly handles wireless communication. It can be understood that the aforementioned modem processor may also not be integrated into the processor 501.

The memory 502 can be used to store software programs and modules. The processor 501 executes various functional applications and data processing by running the software programs and modules stored in the memory 502. The memory 502 may mainly include a program storage area and a data storage area. The program storage area may store the operating system, applications required for at least one function (such as a sound playback function, an image playback function, etc.), etc. The data storage area may store data created according to the use of the electronic device, etc. In addition, the memory 502 may include high-speed random-access memory, and may also include non-volatile memory, such as at least one disk storage device, flash memory device, or other volatile solid-state storage device. Accordingly, the memory 502 may also include a memory controller to provide the processor 501 with access to the memory 502.

The electronic device also includes a power supply 503 that supplies power to various components. Preferably, the power supply 503 can be logically connected to the processor 501 through a power management system, thereby implementing functions such as managing charging, discharging, and power consumption through the power management system. The power supply 503 may also include any components such as one or more DC or AC power sources, a recharging system, a power failure detection circuit, a power converter or inverter, a power status indicator, etc.

The electronic device may also include an input unit 504. The input unit 504 can be used to receive input digital or character information, and to generate keyboard, mouse, joystick, optical, or trackball signal inputs related to user settings and function control.

Although not shown, the electronic device may also include a display unit, etc., which will not be described in detail here. Specifically, in this embodiment, the processor 501 in the electronic device will load the executable files corresponding to the processes of one or more computer programs into the memory 502 according to the following instructions, and the processor 501 will run the computer programs stored in the memory 502, thereby implementing the various functions in the foregoing embodiments of the present application. For example, the processor 501 can execute the following operations:
A first distance and a first azimuth angle between a first device and a second device are detected, where the first device and the second device are in a co-broadcasting scenario; a second distance and a second azimuth angle between the first device and a target user are detected; a third distance between the second device and the target user is calculated based on the first distance, the first azimuth angle, the second distance, and the second azimuth angle; and a playback gain adjustment value is calculated based on the third distance and the second distance, where the playback gain adjustment value is used for performing device playback gain control in the co-broadcasting scenario.

In some embodiments of the present application, the method further includes: calculating a distance difference based on the second distance and the third distance; and calculating a playback delay based on the distance difference, where the playback delay is used for performing device playback time control in the co-broadcasting scenario.

In some embodiments of the present application, the playback gain adjustment value is a gain adjustment value of an entity to be adjusted; after the playback gain adjustment value is calculated based on the third distance and the second distance, the method further includes: performing a summation calculation on an entity playback gain of a reference entity and the playback gain adjustment value to obtain a target playback gain of the entity to be adjusted; and in the co-broadcasting scenario, controlling the reference entity to perform audio playback based on the entity playback gain, and controlling the entity to be adjusted to perform audio playback based on the target playback gain, where the reference entity and the entity to be adjusted are respectively one of the first device and the second device.

In some embodiments of the present application, the playback delay is a delay of an entity to be adjusted; after the playback delay is calculated based on the distance difference, the method further includes: in the co-broadcasting scenario, controlling a reference entity to play a co-broadcasted audio, and controlling the entity to be adjusted to play the co-broadcasted audio, where an audio playback time of the entity to be adjusted is later than that of the reference entity by the playback delay, and where the reference entity and the entity to be adjusted are respectively one of the first device and the second device.

In some embodiments of the present application, calculating the playback gain adjustment value based on the third distance and the second distance includes: performing a ratio calculation on the third distance and the second distance to obtain a distance ratio; and calculating the playback gain adjustment value based on the distance ratio.

In some embodiments of the present application, calculating the playback gain adjustment value based on the distance ratio includes: calculating the playback gain adjustment value according to the formula Δg = 20logA, where A refers to the distance ratio, and Δg refers to the playback gain adjustment value.

In some embodiments of the present application, calculating the playback delay based on the distance difference includes: calculating a ratio of the distance difference to a speed of sound to obtain a delay value; and obtaining the playback delay based on the delay value.

In some embodiments of the present application, obtaining the playback delay based on the delay value includes one of the following methods: taking the delay value as the playback delay; or multiplying the delay value by a preset adjustment coefficient to obtain the playback delay, where the preset adjustment coefficient is an adjustment coefficient corresponding to a device type of the first device and the second device.

In some embodiments of the present application, calculating the third distance between the second device and the target user based on the first distance, the first azimuth angle, the second distance, and the second azimuth angle includes: calculating the third distance according to the formula $D = \sqrt{{h}^{2} + {d}^{2} - 2 hdcos \left(α-β\right)}$, where D refers to the third distance, h refers to the first distance, d refers to the second distance, α refers to the second azimuth angle, and β refers to the first azimuth angle.

A person of ordinary skill in the art will appreciate that all or part of the operations in the various methods of the above embodiments may be implemented by a computer program or by a computer program controlling related hardware. The computer program may be stored in a computer-readable storage medium and loaded and executed by a processor.

Accordingly, an embodiment of the present application also provides a storage medium in which a computer program is stored, where the computer program can be loaded by a processor to execute the operations in any one of the methods provided by the embodiments of the present application.

The storage medium may be a computer-readable storage medium, which may include: a Read Only Memory (ROM), a Random Access Memory (RAM), a magnetic disk, or an optical disc, etc.

Since the computer program stored in the storage medium can execute the operations in any one of the methods provided by the embodiments of the present application, the beneficial effects achievable by the methods provided by the embodiments of the present application can be realized. For details, refer to the foregoing embodiments, which will not be repeated herein.

Those skilled in the art will readily conceive of other embodiments of the present application after considering the specification and practicing the implementations disclosed herein. This application is intended to cover any variations, uses, or adaptations of the present application that follow the general principles of the present application and include common knowledge or conventional technical means in the art not disclosed in the present application.

It should be understood that the present application is not limited to the embodiments described above and shown in the accompanying drawings, but can be modified and changed in various ways without departing from its scope.

## Claims

1. A loudness adjustment method, comprising:
detecting a first distance and a first azimuth angle between a first device and a second device, wherein the first device and the second device are in a co-broadcasting scenario;
detecting a second distance and a second azimuth angle between the first device and a target user;
calculating, based on the first distance, the first azimuth angle, the second distance, and the second azimuth angle, a third distance between the second device and the target user; and
calculating, based on the third distance and the second distance, a playback gain adjustment value, wherein the playback gain adjustment value is used for performing device playback gain control in the co-broadcasting scenario.

2. The method according to claim 1, further comprising:
calculating a distance difference based on the second distance and the third distance; and
calculating, based on the distance difference, a playback delay, wherein the playback delay is used for performing device playback time control in the co-broadcasting scenario.

3. The method according to claim 1, wherein the playback gain adjustment value is a gain adjustment value of an entity to be adjusted; after the calculating the playback gain adjustment value based on the third distance and the second distance, the method further comprises:
performing a summation calculation on an entity playback gain of a reference entity and the playback gain adjustment value to obtain a target playback gain of the entity to be adjusted; and
in the co-broadcasting scenario, controlling the reference entity to perform audio playback based on the entity playback gain, and controlling the entity to be adjusted to perform audio playback based on the target playback gain, wherein one of the reference entities and the entity to be adjusted is the first device, and the other is the second device.

4. The method according to claim 2, wherein the playback delay is a delay of an entity to be adjusted; after the calculating a playback delay based on the distance difference, the method further comprises:
in the co-broadcasting scenario, controlling a reference entity to play a co-broadcasted audio; and
controlling the entity to be adjusted to play the co-broadcasted audio, wherein an audio playback time of the entity to be adjusted is later than that of the reference entity by the playback delay, and wherein one of the reference entities and the entity to be adjusted is the first device, and the other is the second device.

5. The method according to claim 1, wherein the calculating the playback gain adjustment value based on the third distance and the second distance comprises:
performing a ratio calculation on the third distance and the second distance to obtain a distance ratio; and
calculating, based on the distance ratio, the playback gain adjustment value.

6. The method according to claim 5, wherein the calculating the playback gain adjustment value based on the distance ratio comprises:
calculating the playback gain adjustment value according to a formula Δg = 20 log A, wherein A denotes the distance ratio, and Δg denotes the playback gain adjustment value.

7. The method according to claim 2, wherein the calculating the playback delay based on the distance difference comprises:
calculating a ratio of the distance difference to a speed of sound to obtain a delay value; and
obtaining the playback delay based on the delay value.

8. The method according to claim 7, wherein the obtaining the playback delay based on the delay value comprises one of the following:
taking the delay value as the playback delay; or
multiplying the delay value by a preset adjustment coefficient to obtain the playback delay, wherein the preset adjustment coefficient is an adjustment coefficient corresponding to a device type of the first device and the second device.

9. The method according to claims 1, wherein the calculating, based on the first distance, the first azimuth angle, the second distance, and the second azimuth angle, a third distance between the second device and the target user comprises:
calculating the third distance according to a formula $D = \sqrt{{h}^{2} + {d}^{2} - 2 hd cos \left(α-β\right)}$, wherein D denotes the third distance, h denotes the first distance, d denotes the second distance, α denotes the second azimuth angle, and β denotes the first azimuth angle.

10. The method according to claim 1, wherein the detecting the first distance and the first azimuth angle between the first device and the second device comprises:
acquiring sound signals played by the second device and received by a plurality of microphones in the first device; and
calculating, based on the sound signals received by the plurality of microphones, to obtain the first distance and the first azimuth angle.

11. The method according to claim 10, wherein the calculating, based on the sound signals received by the plurality of microphones, to obtain the first distance and the first azimuth angle comprises:
calculating a cross-correlation function corresponding to each pair of microphones of the plurality of microphones based on sound signals received by the pair of microphones;
obtaining a time difference of the sound signals received by the pair of microphones based on the corresponding cross-correlation function;
calculating based on the formula $β = {cos}^{- 1} \frac{τc}{{d}_{0}}$ to obtain the first azimuth angle, wherein τ is the time difference of the sound signals received by the pair of microphones, c is the speed of sound, d₀ is the distance between the two microphones of the pair of microphones, and β is the first azimuth angle;
plotting a plurality of hyperbolas, wherein for each hyperbola, a difference in distance to the corresponding pair of microphones is τc; and
obtaining a position of the second device based on an intersection of the plurality of hyperbolas, and calculating the first distance between the first device and the second device based on a position of the first device and the position of the second device.

12. The method according to claim 1, wherein the detecting a second distance and a second azimuth angle between the first device and a target user comprises:
acquiring an acoustic signal received by a microphone array in the first device when a speaker in the first device plays an ultrasonic signal; and
calculating, based on the acoustic signal, to obtain the second distance and the second azimuth angle between the first device and the target user.

13. The method according to claim 12, wherein the calculating, based on the acoustic signal, to obtain the second distance and the second azimuth angle between the first device and the target user comprises:
performing band-pass filtering on the acoustic signal to obtain a filtered signal;
preprocessing the filtered signal to remove a direct sound and a reflected sound from a stationary object, to obtain a signal to be analyzed;
multiplying the ultrasonic signal by the signal to be analyzed and then performing shaping filtering to obtain a sine wave signal containing distance information;
performing time-domain beamforming on the sine wave signal to improve a signal-to-noise ratio of the signal, and then using a 2D-MUSIC algorithm to estimate and obtain a distance-angle of arrival profile map; and
obtaining the second distance and the second azimuth angle of the target user relative to the first device based on a position with a maximum energy in the distance-angle of arrival profile map.

14. A loudness adjustment apparatus, comprising:
a first detection module, configured to detect a first distance and a first azimuth angle between a first device and a second device, wherein the first device and the second device are in a co-broadcasting scenario;
a second detection module, configured to detect a second distance and a second azimuth angle between the first device and a target user;
a first calculation module, configured to calculate, based on the first distance, the first azimuth angle, the second distance, and the second azimuth angle, to obtain a third distance between the second device and the target user; and
a second calculation module, configured to calculate, based on the third distance and the second distance, to obtain a playback gain adjustment value, wherein the playback gain adjustment value is used for device playback gain regulation in the co-broadcasting scenario.

15. The apparatus according to claim 14, wherein the apparatus further comprises a third calculation module, configured to: calculate a distance difference based on the second distance and the third distance; and calculate, based on the distance difference, to obtain a playback time delay, wherein the playback time delay is used for device playback time regulation in the co-broadcasting scenario.

16. The apparatus according to claim 14, wherein the playback gain adjustment value is a gain adjustment value of an entity to be adjusted; after calculating, based on the third distance and the second distance, to obtain the playback gain adjustment value, the apparatus further comprises a first regulation module, configured to: calculate a target playback gain of the entity to be adjusted by summing an entity playback gain of a reference entity and the playback gain adjustment value; and in the co-broadcasting scenario, control the reference entity to perform audio playback based on the entity playback gain, and control the entity to be adjusted to perform audio playback based on the target playback gain, wherein one of the reference entities and the entity to be adjusted is the first device, and the other is the second device.

17. The apparatus according to claim 16, wherein the playback time delay is a time delay of the entity to be adjusted; after calculating, based on the distance difference, to obtain the playback time delay, the apparatus further comprises a second regulation module, configured to: in the co-broadcasting scenario, control a reference entity to play a co-broadcast audio, and control the entity to be adjusted to play the co-broadcast audio, wherein audio playback of the entity to be adjusted is delayed by the playback time delay relative to the reference entity, and wherein one of the reference entities and the entity to be adjusted is the first device, and the other is the second device.

18. The apparatus according to claim 14, wherein the second calculation module is configured to: calculate a distance ratio of the third distance to the second distance; and calculate, based on the distance ratio, to obtain the playback gain adjustment value.

19. A non-transitory storage medium storing a computer program that, when executed by a processor of a computer, causes the computer to perform the method according to any one of claims 1 to 13.

20. An electronic device, comprising:
a memory, storing a computer program; and
a processor, configured to execute the computer program stored in the memory to perform the method according to any one of claims 1 to 13.
